# EUROPÄISCHE PATENTSCHRIFT

(11) **EP 2 852 517 B1**
(45) Veröffentlichungstag und Bekanntmachung des Hinweises auf die Patenterteilung: **15.05.2019**
(21) Anmeldenummer: 13719757.0
(22) Anmeldetag: 11.04.2013
(51) Int. Cl.: B60T 13/74, H02K 5/173

(54) **LAGERANORDNUNG IN EINEM AXIALANTRIEB**
BEARING ARRANGEMENT IN AN AXIAL DRIVE
DISPOSITIF DE PALIER D'UN ENTRAÎNEMENT COAXIAL

(30) Priorität: 20.04.2012 DE 102012103506; 25.01.2013 DE 102013100741
(43) Veröffentlichungstag der Anmeldung: 01.04.2015
(73) Patentinhaber: IPGate AG, 8808 Pfäffikon (CH)
(72) Erfinder: LEIBER, Thomas, 81675 München (DE); LEIBER, Heinz, 71739 Oberriexingen (DE); UNTERFRAUNER, Valentin, 80935 München (DE)
(74) Vertreter: Lenzing Gerber Stute
(86) Internationale Anmeldenummer: PCT/EP2013/057609
(87) Internationale Veröffentlichungsnummer: WO 2013/156391

(56) Entgegenhaltungen:
- EP-A2- 0 886 076
- WO-A2-2006/074326
- DE-A1-102009 014 340
- DE-A1-102011 002 565

## Beschreibung

Die Erfindung betrifft eine Antriebseinrichtung, insbesondere mit einem Motor und einem Getriebe.

### Stand der Technik

Der Bedarf für hochdynamische Antriebe steigt mit zunehmender Elektrifizierung des Fahrzeugs und auch im allgemeinen Maschinenbau. Beispiele sind elektrische Aktuatoren für Bremse, Fahrwerk, Lenkung, Robotik.

Im Trend zur Elektrizifizierung aller Wirtschaftszweige werden immer mehr Elektromotoren (EM) als Stellantriebe eingesetzt. Insbesondere gilt dies für Elektromotoren (EM) mit Spindelantrieb und Kugel-Gewinde-Getriebe (KGT). Im Kfz, insbesondere bei "Future Brake", d. h. zukünftigen Bremssystemen, wie integrierte Systeme und elektromechanische Bremse (EMB) für a) Antriebe der Bremsbeläge und b) Antriebe für Kolben. In beiden Fällen ist eine geeignete Lagerung des Rotors und der Spindel erforderlich.

In der DE 10 2005 040389 A1 ist ein Motorkonzept beschrieben, welches eine erheblich kleinere Drehmasse besitzt als andere vergleichbare Motoren, dadurch, dass die Magnete auf einen dünnwandigen Rotor aufgesetzt sind und der magnetische Rückschluss über einen zweiten Luftspalt über einen fest stehenden Innenstator erfolgt. Der Aufbau ist jedoch durch beidseitige Lagerung mit zwei Innenstatoren aufwändiger im Vergleich zum konventionellen Motor mit rotierendem Rückschluss und einem Luftspalt.

Bei vielen Antrieben wird die Drehbewegung über ein Kugel-Gewinde-Getriebe (bzw. Kugelgewindetrieb KGT) mit Mutter und Spindel in eine lineare Bewegung umgesetzt. Hierbei geht die Drehmasse der Mutter in die Dynamik ein. Zusätzlich ist bei diesem Antrieb eine Abstützung des Drehmoments und eine Feder zur Spindelrückstellung in die Ausgangslage notwendig.

Bei der Vorrichtung gemäß DE 10 2010 045617 der Anmelderin wird im Normalfall das Kugel-Gewinde-Getriebe und das Lager durch positive Axialkräfte +Fax nur von einer Seite beansprucht, die im Wesentlichen durch die Druckkraft auf den Kolben entstehen. Aber auch relativ kleine Radialkräfte von ca. 10% wirken auf die Lagerung. Es ist jedoch der Fehlerfall zu berücksichtigen, wenn z.B. der Kolbenstößel klemmt. Hierbei wirkt die Pedalkraft auf den Kolbenstößel, so dass eine negative Axialkraft -Fax auf das Kugel-Gewinde-Getriebe und die Lagerung wirkt. Ein weiterer Fahlerfall kann auftreten, wenn der Rotor auf den scharfkantigen Statorzahn auftrifft, was zu einem Blockieren des Rotors und damit des Antriebes führen kann. Bei all diesen Fehlerfällen sollte die Hilfsbremswirkung gegeben sein. Diese Fehlerfälle sind sehr selten und werden durch die Diagnose erkannt. Das Fahrzeug muss dann zum Service.

Aus der DE 197 57 038 ist auch bereits eine typische Verwendung eines integrierenden Vierpunktlagers für das KGT bekannt, wobei der Rotor auf dem KGT gelagert ist. Rotor- und Sensorantrieb sind auf einer Seite des KGT angeordnet.

Die DE 10 2008 059 862 und DE 10 2010 050 132 verwenden für Rotor und KGT zwei Lager, wobei der Rotor auf einer Seite eines Lagers und der Sensorantrieb auf der anderen Seite angeordnet WO2006/074326 A2 beschreibt ein konventioneller elektromechanischer Bremssattel, ohne Innenläufermotor.

### Aufgabe der Erfindung

Der Erfindung liegt die Aufgabe zugrunde, eine verbesserte Antriebseinrichtung für einen hochdynamischen Antrieb zu schaffen, insbesondere mit einem reduzierten baulichen Aufwand.

### Lösung der Aufgabe

Diese Aufgabe wird erfindungsgemäß durch die Merkmale der Patentansprüche 1, 2 oder 15 gelöst. Ausführungsformen bzw. Ausgestaltungen der Erfindung sind in weiteren Ansprüchen enthalten.

Mit anderen Worten basiert die Erfindung auf dem Grundgedanken, die Rotorlager auf nur einer Seite im Motorgehäuse bzw. im entsprechenden Gehäuseteil anzuordnen, so dass die Lagerkräfte (zumindest im Wesentlichen) von diesem Gehäuseteil aufgenommen werden.

Eine Ausführung der Erfindung sieht vor, dass das bzw. die Lager auf einem mit dem drehenden Getriebeteil verbundenen bzw. integrierten Bauteil, insbesondere Lagerflansch angeordnet sind. Bei elektromotorischen Antrieben der eingangs genannten Art ist oft eine kurze Baulänge und ein kleiner Luftspalt des Motors von großer Bedeutung. Dies wird erfindungsgemäß dadurch erreicht das der Stator mit Wicklung und Motorgehäuse gleich lang oder kürzer ist als der Rotor mit Getriebe. Diesbezüglich ist die einseitige Lagerung zwischen Getriebe und Sensorantrieb in einem Lagerring die kürzest mögliche und zugleich die Lagerung in einem Lagerring mit Befestigung im Motorgehäuse. Wenn zusätzlich der Lagerflansch in das Getriebe integriert wird und die Lagerung mit den Lagern kombiniert wird, sind auch die kleinsten radialen Toleranzen erreichbar, die den Luftspalt des Motors bestimmen.

Mit der erfindungsgemäßen Lösung wird ferner eine Antriebseinrichtung geschaffen, mit wenig aufwändigem Aufbau, insbesondere auch einfacher Lagerung für Motor, mit einer möglichst kleinen Toleranzkette und reduzierter Drehmasse. Bei Lösungen mit Kugel-Gewinde-Getriebe ergeben sich durch eine nur einseitige Lagerung des Rotors und des Kugel-Gewinde-Getriebes günstige Integrationsmöglichkeiten und Drehmomentenabstützung.

Ein wichtiger Baustein für eine genaue Motorregelung ist ein Sensor, der vorzugsweise auf der Außenseite des Motorgehäuses angeordnet ist, da dadurch viele Sensorlösungen angewendet werden können, wie zahnradgetriebene Drehzahlsensoren oder Segmentsensoren mit entsprechendem Sensortarget. Gemäß einem Aspekt der Erfindung wird für den Sensor eine Lagerung geschaffen, die vorteilhaft zwischen dem Getriebe und dem Sensorantrieb angeordnet ist. Dadurch kann die andere Seite des Getriebes mit einem Antrieb, z.B. für den Kolben eines Hauptzylinders eines Bremssystems belegt werden. Um Baulänge einzusparen ist parallel dazu eine Momentabstützung optimal, da der Hub an der Momentabstützung gleich dem Kolbenhub bzw. dem Spindelhub eines Kugel-Gewinde Getriebes ist.

Durch die einseitige Lagerung kann die lagerfreie Seite voll für die Drehmomentabstützung genutzt werden, auch in Kombination mit einer Spindelrückstellfeder. Die einseitige Lagerung umfasst die Drehmasse, die im Wesentlichen aus Rotor und der mit dem Rotor fest verbundenen Mutter des Kugel-Gewinde-Getriebes und ggf. einem Flansch zum Antrieb eines Motorsensors besteht. Die Drehmasse soll möglichst klein sein, da sie die Dynamik des Antriebes wesentlich mitbestimmt. Hierfür werden vorteilhafte Lösungen, insbesondere bezüglich Rotor und Kugel-Gewinde-Getriebe vorgeschlagen. Für die Gestaltung der einseitigen Lagerung aus Fest- und Loslager werden verschiedene Möglichkeiten vorgeschlagen. Bzgl. des Festlagers: Axial- und Radiallager. Bzgl. des Loslagers: Radial-Nadellager. Oder die Zusammenfassung von Fest- und Loslager, z.B. Axiallager und Radiallager; zwei Axiallager mit Stützring für den Fehlerfall; Vier-Punkt-Lager mit geteiltem oder ungeteiltem Innen-bzw. Außenring, teilweise mit zusätzlichem Stützring.

Der mit der Mutter des Kugel-Gewinde-Getriebes verbundene Flansch bzw. die Welle nimmt hierbei das Innenlager auf. Das Außenlager ist im Motorgehäuse gelagert oder besonders vorteilhaft bei Motoren mit einem Luftspalt in einem Lagerring oder bei doppeltem Luftspalt im Innenstator. Dieser Lagerring wird vorteilhaft formschlüssig mit dem Motorgehäuse verbunden. Wichtig ist die Toleranzkette vom Lagerflansch bis zum Stator-Innendurchmesser, welcher den Wirkungsgrad beeinflussenden Luftspalt bestimmt. Diese Toleranzkette kann besonders klein gehalten werden, wenn z.B. bei einem Vier-Punkt-Lager der Außenlagerring mit dem Lagerrig bzw. Innenstator kombiniert gefertigt und geprüft werden kann und der Flansch mit der Mutter des Kugel-Gewinde-Getriebes verbunden ist. Dasselbe gilt für den Schlag des Sensorzahnrades bzw. Sensortargets wen diese direkt auf dem mit der Mutter des Kugel-Gewinde-Getriebe verbundenen Flansch gelagert ist.

Für die Lagerung ist bedeutsam, dass sie im Normalbetrieb eine hohe Quersteifigkeit bzgl. Radialkräften von etwa 10% der Axialkraft aufweist. Dies wird sowohl mit Axial- als auch Vier-Punkt-Lager erreicht. Für Axialkräfte in beiden Richtungen benötigt das Axiallager noch ein zweites Lager, was bei einem Vier-Punkt _Lager nicht erforderlich ist. Wenn diese aber bei axialen und radialen Kräften kippsicher sein soll, ist die Toleranzanpassung der geteilten Außen- bzw. Innenringe teuer. Um dies zu vermeiden werden vereinfachte Lagerungen bzw. Innenringlösungen vorgeschlagen. Mit der Erfindung und ihren Ausgestaltungen wird auch eine vereinfachte Lagerung mit hoher Quersteifigkeit und geringen Toleranzen zum Stator und Schlag von Sensorrad oder -target und Sicherheit gegen Rotorstreifen an Statorzähnen geschaffen.

Eingangs sind seltene Fehlerfälle angesprochen, bei denen positive und negative Axialkräfte auftreten. Da die negativen Axialkräfte mit Radialkräften nur selten und kurzzeitig auftreten, kann ein vereinfachter Stützring verwendet werden, welcher die radiale Zentrierung und Quersteifigkeit aufnimmt bzw. gewährleistet. Dieser Stützring kann auch genutzt werden, falls bei Toleranzüberschreitung und radialer Last der Rotor sich im scharfkantigen Stator verhakt und den Antrieb blockiert oder auch als Abstützung des Rotors bei extremer Schock- oder Stoßbeanspruchung. Die Erfindung bzw. ihre Ausführungen stellt daher auch sicher, dass die Lagerung in seltenen Fällen auftretende Kräfte in entgegengesetzter Richtung der Druckkraft des Kolbens, vom Pedalstößel herrührend, aufnehmen kann. Weiterhin sind Lösungen vorgesehen, die ein Verhaken des Rotors am Stator verhindern.

Die Spindel des Kugel-Gewinde-Getriebes ist befettet und nimmt schnell Schmutz oder Verschleißpartikel auf. Diese können sowohl vom Rotor oder Zahnradantrieb oder dem umgebenden Gehäuse herrühren. Hierzu wird am Rotor ein Schutz uns am Flansch eine Spindelschutzhülse vorgeschlagen. Auch sind Lösungen dargestellt, um die Lager gegen Schmutzpartikel uns Fettverlust abzudichten.

Der Rotor muss mit dem Kugel-Gewinde-Getriebe verbunden werden, um das Motordrehmoment sicher und spielfrei zu übertragen. Dazu werden vorgeschlagen: Aufpressen oder Kleben des Rotors; Verschweißen oder Verschrauben es Rotors.

Mit der erfindungsgemäßen Lösung bzw. deren Ausführungen ist eine Antriebs- bzw. Motorkonstruktion mit einer klein bauenden Lagerung mit integriertem Kugel-Gewinde-Getriebe geschaffen. Realistische Fehler und Einflüsse sind ebenfalls berücksichtigt. Die wesentlichen Konstruktionselemente sind ganzheitlich betrachtet.

Eine bedeutende Rolle bezüglich des Aufwandes spielt die Lagerung und die Drehmasse. Diese erfolgt auf einer Seite im Motorgehäuse. Beim sogenannten Loslager ist der Innenstator bzw. die KGT-Mutter mit dem Lagerelement aufgebaut. Der Innenstator und die Motorlager bilden mit dem Motorgehäuse eine Baueinheit in die vorzugsweise die Fixierung des Stators mit einbezogen ist. Durch die erfindungsgemäße Lösung sind viele Toleranzen reduziert, weil die Lagersitze von Los- und Festlager in einer Aufspannung spanabhebend oder eingespritzt gefertigt werden können. Das Festlager sitzt im Motorgehäuse. Die Axiallagerung erfolgt, wenn ein KGT mit Spindel zum Einsatz kommt zweckmäßig in der Hauptkraftrichtung der Spindel über ein Axiallager des Rotors zusammen mit dem Festlager für die andere Richtung. Hierbei können als Lagerelement sowohl Wälz- als auch Gleitlager zum Einsatz kommen. Dieser Aufbau ist sowohl für einen konventionellen Motor mit nur einem Luftspalt zwischen Rotor und Stator geeignet als auch, noch besser, für einen Zwei-Luftspalt-Motor, wie er in der DE 10 2005 040389 A1 der Anmelderin beschrieben ist.

Durch diesen Aufbau ist beim Zwei-Luftspalt-Motor nur ein dünnwandiger Rotor mit Magneten und ein fest stehender Rückschlussring notwendig, als gleichwertig oder günstiger als dem konventionellen Motor, welcher zusätzlich ein zweites Lagerschild mit entsprechendem Aufwand und Toleranzen benötigt. Hierbei kann der KGT in die Lagerung mit integriert sein. Beim Ein-Luftspalt-Motor bildet der Innenstator eine Lagerhülse bzw. Lagerring, der Rotor beinhaltet den mitlaufenden Rückschlussring und ist daher bezüglich der Drehmasse größer.

Es sind zwar bereits Motoren mit nur einseitiger Lagerung bekannt, siehe z.B. DE 199 02 371 A1. Diese sind jedoch bezüglich Aufbau und Leistung von der Erfindung grundverschieden, so dass ein Vergleich nicht sinnvoll möglich ist.

Neben dem Aufbau soll die Drehmasse bei der Erfindung bzw. ihren Ausgestaltungen im Vergleich zu dem in der DE 10 2005 040389 A1 beschriebenen Motor weiter reduziert werden. Hierbei wird die KGT-Mutter mit einbezogen. Eine Optimierung der Drehmasse ist möglich durch eine offene KGT-Mutter mit möglichst dünnen Flanschen für die Aufnahme bzw. Fixierung des Rotors. Die Kugelrückführung erfolgt in einem leichtgewichtigen Käfig aus Kunststoff, der in einer insbesondere radial nach außen offenen Ausnehmung innerhalb der KGT-Mutter angeordnet ist. Hierbei kann sowohl eine achsparallele Kugelführung als auch in Querrichtung zur Achse in einem Winkel von 30° - 45° zur Achse erfolgen. Bekanntlich ist die Gestaltung der Kugelführung aus der Spindel heraus genauso wie in die Spindel hinein von Bedeutung. Auch soll neben der einreihigen auch eine zweireihige Kugelrückführung möglich sein. Zur Reduzierung der Drehmasse wird die KGT-Mutter zusätzlich mit dem Rotor und der Motorlagerung integriert. Dies erfolgt zweckmäßig durch einen einfachen Rotor, der stirnseitig mit dem KGT-Flansch verbunden, insbesondere angeschweißt ist und einer Verlängerung der KGT-Mutter als Lagerhülse für das Festlager.

Das Drehmoment (Md) des Motors wird bestimmt durch die Verstellleistung bei einem linearen Antrieb, d. h. in welcher Zeiteinheit eine Kraft über einen bestimmten Weg aufgebaut wird. Wenn zusätzlich die Kraft wechselseitig dynamisch genutzt wird, so entsteht hierfür ein getrennter Drehmoment-Bedarf. Hierfür im Folgenden ein Beispiel aus der Bremstechnik.

Md1 für den Druckaufbau: hierbei bewegt die Spindel den Hauptzylinder-Kolben. Zielwert 200 bar in z. B. 200ms, was z. B. 5 Nm vom Motor erfordert. Md2 für die Druckmodulation in beiden Richtungen entsprechend Multiplex (MUX) wie es in der DE 10 2005 055751 A1 der Anmelderin näher beschrieben ist, auf die hier auch zu Offenbarungszwecken insofern Bezug genommen wird: bei einer bestimmten Drehmasse sind ebenso 5 Nm erforderlich.

Wird nun die Drehmasse erheblich reduziert, z. B. 50 %, so ist Md2 erheblich kleiner. Damit kann nun für Md1 die Gewindesteigerung reduziert werden, was ein kleines Drehmoment vom Motor erfordert. Damit wird der Motor bei vorgegebenem Radius des Rotors entsprechen kürzer, was Material und zusätzliche teure Magnetkosten und Gewicht reduziert. D. h. die Reduzierung der Drehmasse spielt eine wichtige Rolle. Hierbei ist der Ein-Luftspalt-Motor ungünstiger als der Zwei-Luftspalt-Motor aber durch diesen Aufbau und offenem integrierten KGT noch deutlich besser als der konventionelle Motor.

Neben o. g. erfordert der Antrieb mit KGT eine DrehmomentAbstützung und Spindelrückführung. Diese lassen sich in einem Zwischengehäuse vorzugsweise aus Kunststoff zum Antrieb z. B. THZ-Gehäuse einfach realisieren.

Mit der Erfindung bzw. ihren Ausgestaltungen wird, auch bezüglich Herstellung und Montage, ein überraschend einfacher, kostengünstiger und hochdynamischen Antrieb geschaffen, welcher es ermöglicht, einen Motor mit kleinerem Drehmoment und Baugröße darzustellen. Die dazu höhere Drehzahl wird durch die bekannten Maßnahmen wie Wicklung und Phasenschaltung gelöst. Denkbar sind auch zwei getrennte Wicklungen pro Zahn, was zusätzlich eine Redundanz für den Ausfall einer Wicklung oder Ansteuerung bedeutet.

Die Erfindungen und ihre Ausführungen sehen eine einseitige Lagerung für den Rotor und das Kugel-Gewinde-Getriebe vor, zur Anwendung sowohl bei Ein-Luftspalt-Motoren wie auch bei Zwei-Luftspalt-Motoren.

Es sind verschiedene Lageranordnungen mit Axiallager und Radiallager, insbesondere mit Lagervorspannung, z.B. mittels Wellscheibe und Stützring vorgesehen. Vorteilhaft können z.B. zwei Axialkugellager mit Stützring und axialem Spiel vorgesehen sein. Auch ein Vier-Punkt-Lager mit geschlossenem oder geteiltem Innen-bzw. Außenring kann vorteilhaft vorgesehen sein. Derartige Vier-Punkt-Lager sind bei richtiger Positionierung bezüglich Baulänge und wechselnder axialer Belastung überlegen.

In vorteilhafter Weise kann die Laufbahn eines Axialkugellagers an der Mutter des Kugel-Gewinde-Getriebes vorgesehen sein. Bei einer weiteren Ausführungsform ist vorgesehen, dass das Lager integriert in einem Gehäuseteil des Motors bzw. einem fest damit verbundenen Bauteil integriert ist. Die Verbindung des Bauteiles mit dem Gehäuseteil kann zweckmäßig formschlüssig durch Verstemmen, Bördeln oder Pressverstemmen erfolgen.

Ein Stützring kann gemäß einer weiteren Ausführungsform zwischen umlaufenden und Gehäusefesten Teilen vorgesehen sein insbesondere an der Mutter des Kugel-Gewinde-Getriebes, dem Motorgehäuse bzw. dem damit fest verbundenen Bauteil oder am Stator.

Mit diesen Ausführungen wird eine Vereinfachung der Lagerung mit hoher Quersteifigkeit und geringen Toleranzen zum Stator und Schlag des Flansches zu Sensorrad oder Sensortarget und Sicherheit gegen Rotorstreifen am Stator geschaffen.

Mit der erfindungsgemäßen Lösung bzw. ihren Ausgestaltungen ergeben sich weitere Vorteile wie folgt:
- eine kurze Baulänge;
- das Lager ist in eine Lagerhülse bzw. Lagerschale integriert
- kleine Lagertoleranzen von Lager zu Rotor;
- Spindelanschlag für falsche Motoransteuerung als Überlastschutz für Kugelgewindetrieb und Lager (Stoßbelastung);
- Spindelschutz gegen Fremdpartikel, die an der befetteten Spindel haften und zum Blockieren führen können;
- Montage des Rotors über Schweißung oder Kraft- und Formschluss;
- voll prüfbare Montageeinheit aus dem Kugel-Gewinde-Antrieb und Lager mit Sensorrad;
- der zweite Innenring oder Außenring des Lagers wird durch eine Federscheibe ersetzt, die vorzugsweise in einen Zahnradträger für einen Motorsensor integriert ist;
- Außendichtung des 4-Punkt-Lagers um Fettverlust bei höheren Temperaturen zu vermeiden.

Ausführungsbeispiele der Erfindung und ihrer Ausgestaltungen sind in der Zeichnung dargestellt und im Folgenden näher beschrieben.

Es zeigen:
- Fig. 1: den grundsätzlichen Aufbau der einseitigen Lagerung bei einem Ein-Luftspalt-Motor (untere Hälfte) und bei einem Zwei-Luftspalt-Motor (obere Hälfte);
- Fig. 2: einen Ausschnitt mit Integration des KGT in Rotor und Lagerung für einen Zwei-Luftspalt- Motor;
- Fig. 3: Ausschnitt aus dem Rotor;
- Fig. 4: eine Magnetfixierung;
- Fig. 5: eine Lagergestaltung bzw. -anordnung mit Axial- und Radiallager;
- Fig. 6: eine weitere Lagergestaltung bzw. -anordnung mit ungeteiltem Vier-Punkt-Lager;
- Fig. 7: eine dritte Lagergestaltung bzw. -anordnung mit geteiltem Vier-Punkt-Lager;
- Fig. 8: eine vierte Lagergestaltung bzw. -anordnung mit Axiallager;
- Fig. 9a-9d: verschiedene Anordnungen bzw. Befestigungen der Lagerhülse am Gehäuse;
- Fig. 10: eine Antriebseinrichtung mit Motor und Kugel- Gewinde-Getriebe (KGT) und (teilweise)einer Kolben-Zylinderanordnung, die z.B. Teil eines Kraftfahrzeug-Bremssytems sein kann;
- Fig. 11: einen Ausschnitt mit Integration des KGT in Rotor und Lagerung für einen Zwei-Luftspalt-Motor;
- Fig. 11a: eine Ansicht einer formschlüssigen Verbindung zwischen einem Zahnradträger und einem Lagerteil;
- Fig. 12: einen Ausschnitt mit Integration des KGT in Rotor und Lagerung für einen Zwei-Luftspalt-Motor wobei diverse zusätzliche Maßnahmen dargestellt sind.

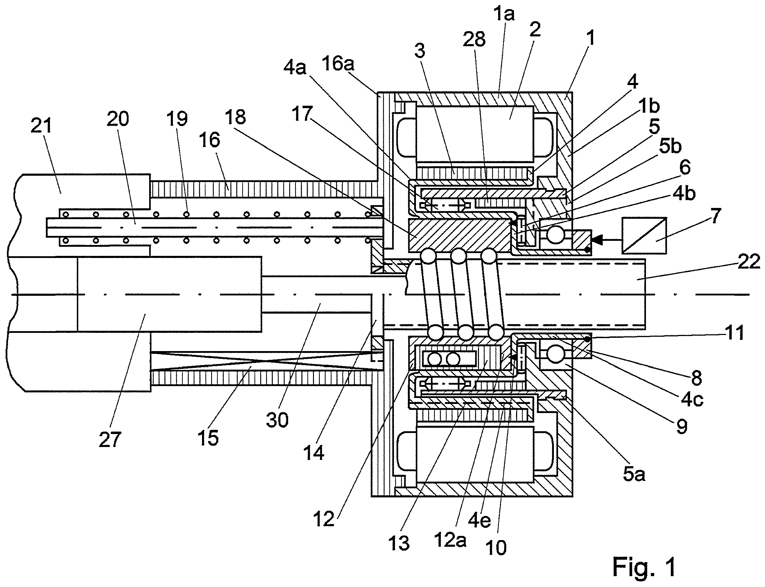

Fig. 1 zeigt den grundsätzlichen Aufbau des Motors mit eine einteiligem Motorgehäuse 1, Stator mit Wicklung 2, Rotor 4 mit Permanentmagnet 3, Kugel-Gewinde-Getriebe (KGT) 18 und Spindel 22. Im Gegensatz zum Stand der Technik ist der Rotor über ein Nadel- oder auch Gleitlager 17 im Innensator 5 gelagert und im Festlager 9 im Motorgehäuse.

Das Motorgehäuse 1 ist im Längsschnitt im Wesentlichen U-förmig ausgebildet, mit einem zylindrischen Wandteil 1a und einem radial verlaufenden Seitenwandteil 1b. Auf der dem Seitenwandteil 1b gegenüberliegenden Seite ist ein radial verlaufendes Wandteil 16a eines Zwischengehäuses 16 angeordnet und mit dem zylindrischen Wandteil 1a des Motorgehäuses verbunden, so dass der Motor und der KGT umschlossen werden.

Der Rotor 4 weist sowohl beim Ein-Luftspalt-Motor, wie auch beim Zwei-Luftspalt-Motor im Längsschnitt einen im Wesentlichen U-förmigen Abschnitt 4a auf, an dessen äußeren Schenkel die Permanantmagnete 3 befestigt sind. Der innere Schenkel des U-förmigen Abschnittes und der Schenkel 4b liegen an der Außenseite der KGT-Mutter an. Im oberen Bildteil ist der äußere Schenkel dünnwandig und trägt die Magnete und nimmt einen Teil des Rückschlusses auf. Daran anschließend ist ein radialer Abschnitt 4b vorgesehen, der an der Stirnseite der KGT-Mutter, insbesondere mittels Schweißen, befestigt ist. Schließlich folgt ein achsparalleler Abschnitt 4c,der an der Innenseite des Festlagers 9 anliegt, das in einer Ausnehmung des Motorgehäuses 1 sitzt. Ein hülsenförmiger Innenstator 28 ist mit einem Ende im Motorgehäuse befestigt und erstreckt sich mit seinem freien Ende in den U-förmigen Abschnitt 4a des Rotors. Dieser Innenstator übernimmt den Rest des Rückflusses der Magnete.

In der unteren Bildhälfte ist der Ein-Luftspalt-Motor dargestellt. Hierbei ist anstelle des Innenstaors eine Lagerhülse 5a eingesetzt. Der Rotor 4 ist dickwandiger ausgeführt und nimmt die Magnete auf, deren Rückfluss nach üblicher Motorentechnik über den Rotormantel verläuft. Hierbei kann zur Vereinfachung auch ein nicht geblechter Rotor eingesetzt werden. Die höheren Wirbelstromverluste sind bei vielen Anwendungen erträglich. Es kann auch ähnlich wie beim Zwei-Luftspalt-Motor eine dünnwandige Rotorhülse eingesetzt werden, bei der der Rückschlussring 4e z.B. aufgepresst wird.

Die Axialkräfte der Spindel werden in der Hauptrichtung über ein Axial-Nadellager 6 und in der zweiten Richtung mit kleineren Kräften über das Festlager 9 aufgenommen. Die Lager sind an bzw. auf der Rotorhülse angeordnet. Das Sensorrad 8 ist bei 11 mit der Lagerhülse vorzugweise durch Schweißen fixiert. Die Rotorhülse ist bei 10 am KGT fixiert, ebenfalls vorzugsweise durch Schweißen, kann aber auch in eine Umfangsnut eingepresst werden. Das Radiallager 17 wird axial über eine Hülse 28 oder entsprechende Gestaltung des Innenstators 5 auf Abstand gehalten. Zur Reduzierung der Drehmasse ist das Kugel-Gewinde-Getriebe 18 mit einer Ausnehmung 18a versehen, wie in der unteren Bildhälfte zu sehen ist, die zur Gewichtsreduzierung und optional zur Aufnahme eines Kugelkäfigs 13 frei gespart ist, wobei die beiden schmalen, die Ausnehmung begrenzenden Flansche 12 und 12a seitliche Begrenzungen der Ausnehmung bilden. Diese Flansche sind in der Formgestaltung auf minimale Drehmasse ausgebildet. Die Kugelrückführung erfolgt in einem Kugelkäfig, vorzugsweise in einem Kunststoffkäfig. Dabei kann die Kugelrückführung ein- oder zweireihig parallel oder unter einem bestimmten Winkel zur Achse 30 - 60° erfolgen. Durch diese offene Gestaltung kann die Drehmasse des Kugel-Gewinde-Getriebes bis zu 70 % reduziert werden. Durch diese Lagerung ist die Toleranzkette auch beim Zwei-Luftspalt-Motor klein und auch in der Anzahl der Teile vergleichbar mit dem konventionellen Ein-Luftspalt-Motor. Vorteilhaft ist auch, dass Gehäusemaße in einer Aufspannung bearbeitet werden können, sofern der Innenstator in ein Druckgussgehäuse eingespritzt wird. Der Luftspalt zwischen Rotor und Stator hat einen großen Einfluss auf das Drehmoment. Hierbei sind die Toleranzketten im Gehäuse 1, Innenstator 5 und Sitz des Festlagers 9 und Rotor 4 mit Magnet 3, Lagersitz für Radiallager 17 und Festlager 9 die maßgeblichen Maße. Hierbei ist vorteilhaft, dass die Toleranzkette im Motorgehäuse in einer Einspannung bearbeitet werden kann und ebenso der Rotor 4 für die Lagersitze und Auflage der Magnete in einer Aufspannung bearbeitet werden kann.

Durch entsprechende Strukturierung des Motorgehäuses kann das Teil mit Innenstator komplett aus Kunststoff ohne Nachbearbeitung gespritzt werden, was enorme Kosten- und Gewichtsreduzierung bedeutet. Der Innenstator kann auch mit dem Lagersitz 5b kombiniert werden. Auch kann es vorteilhaft sein, zusammen mit dem Innenstator bzw. der Lagerhülse den Stator mit Wicklung mit in das die Lager aufnehmende Kunststoffgehäuseteil einzuspritzen. Dies gilt bei entsprechender Gestaltung der Lagerhülse auch für den Ein-Luftspalt-Motor. Für viele Anwendungen z. B. der Bremse ist die thermische Belastung nicht hoch, so dass die Wärmabfuhr unbedeutend ist. Ggf. kann diese durch eine nicht gezeichnete eingespritzte Al-Hülse, die den Stator aufnimmt, verbessert werden. Der Motor benötigt zur Ansteuerung der einzelnen Phasen und Positionierung des Antriebes einen Sensor, der über das Sensorrad 8 aktiviert wird. Hierbei kann die Vielzahl von Sensoren wie zahnradangetriebener Drehwinkelgeber bis zum Segmentgeber eingesetzt werden.

Der Spindelantrieb erfordert eine Rückstellung, die besonders einfach über einen Kupplungsflansch 14, der mit der Spindel drehfest und axial abgestützt wird, verbunden ist. Die Rückstellfeder 19, vorzugweise zwei Stück, stützt sich am Flansch 14 ab und wird im Führungsbolzen 20 geführt, der im Gehäuse 21 oder auch zusätzlich im Zwischengehäuse 16 gelagert ist.

Die Momentabstützung erfolgt über denselben Kupplungsflansch 14, welcher auch vorzugweise um 180° versetzte zwei Stege greift.

Das Antriebselement 27, z. B. ein Kolben, wird vorzugsweise von einem Koppelelement 30 betätigt, welches mit der Spindel 22 verbunden ist.

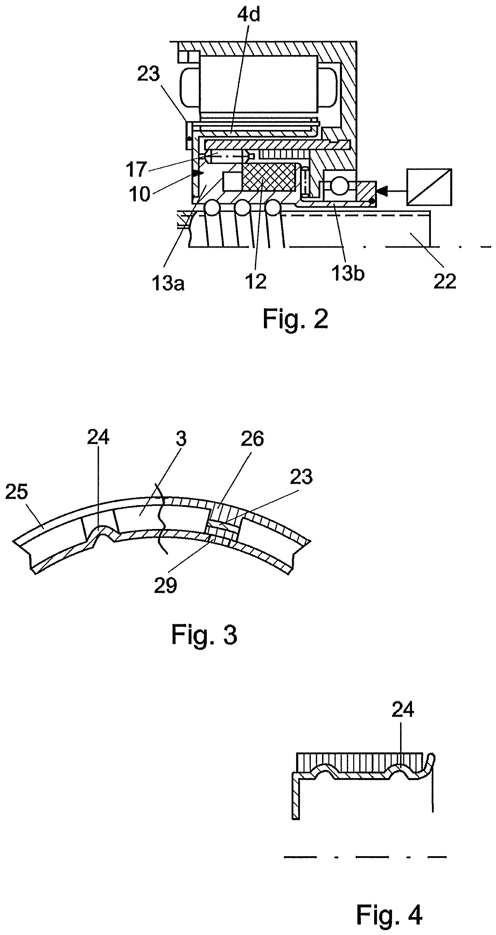

Fig. 2 zeigt einen Ausschnitt von Rotor und Stator bei einem Zwei-Luftspalt-Motor. Zur weiteren Reduzierung der Drehmasse ist stirnseitig an Flansch 13a der KGT-Mutter ein vereinfachter Rotor 4d bei 10 fixiert. Die vorzugsweise formschlüssige Fixierung kann über Schweißen, Nieten oder Verstemmen erfolgen. Auch kann am Umfang des Flansches über eine Nut und entsprechende Formgebung der Rotorhülse eine formschlüssige Fixierung erfolgen. Der Flansch ist hierbei entsprechend vorbereitet, z. B. aus nicht gehärtetem Material oder einer weichen Materialzone. Außerdem übernimmt die mit der KGT-Mutter 18 verbundene Lagerhülse 13b die Rotorlagerung am Festlager. Diese Lagerhülse 13b kann als getrenntes Teil gestaltet sein und entsprechend 4a mit dem KGT-Flansch fixiert und verbunden sein. Zusätzlich kann zur Fixierung der Magnete eine Fixierhülse 23 mit Abstandsstegen am Rotor befestigt werden. Diese greifen stirnseitig, siehe Fig. 3, durch entsprechende Öffnungen des Rotors und kann zweckmäßig aus Metall oder Kunststoff hergestellt werden.

Fig. 3 zeigt einen Ausschnitt aus dem Rotor mit Fixierung der Magnete 3 über Stege 23 oder Ausdrückungen 24. Zweckmäßig werden die Magnete geschützt durch eine Schutzhülse 25 oder entsprechende Umspritzung 26. Zur besseren Verankerung der Umspritzung können Löcher im Rotor vorgesehen werden.

Fig. 4 zeigt einen Längsschnitt eines Rotors mit Ausdrückungen, welche durchgängig über die gesamte Magnetlänge oder auch nur partiell sein können.

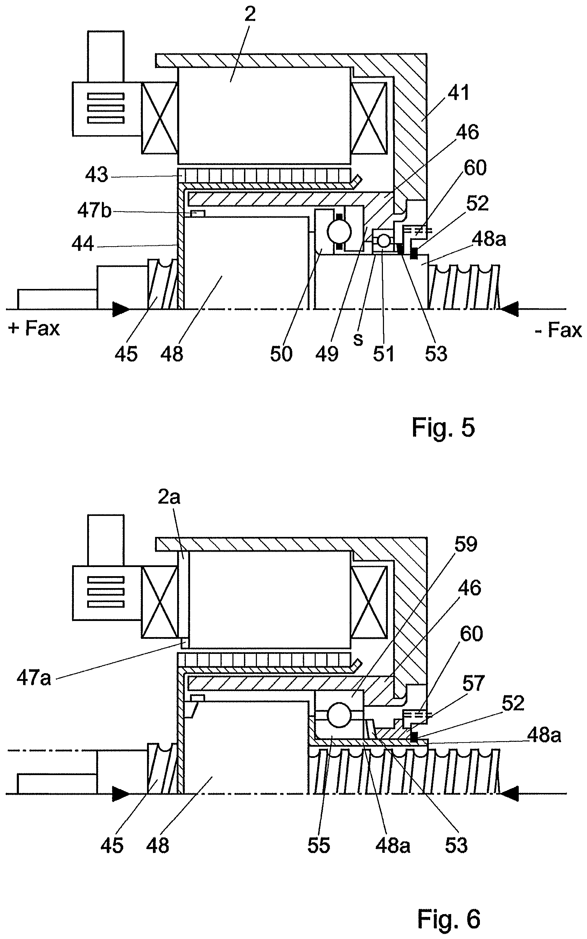

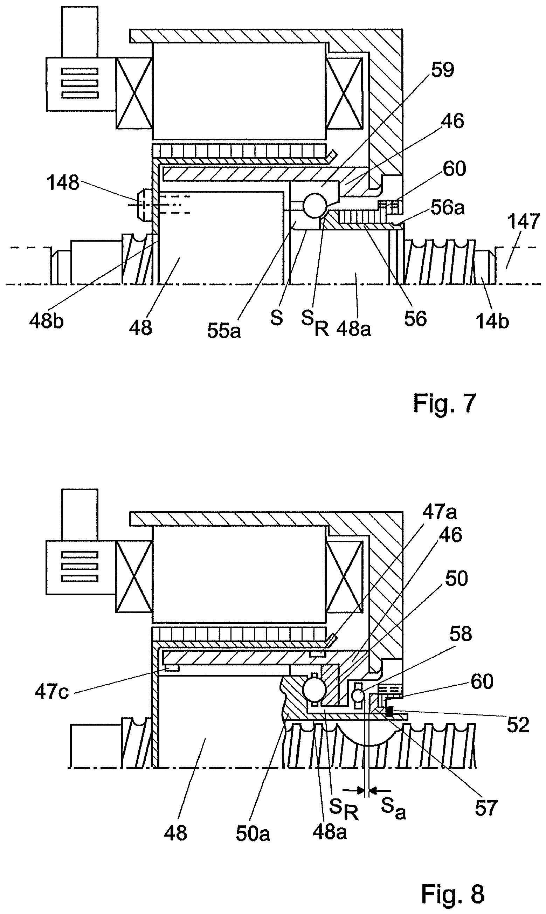

In Figur 5 ist die obere Hälfte eines Antriebes mit im Längsschnitt im Wesentlichen U-förmigen Motorgehäuse 41, Stator mit Wicklung 2, Rotor 44 mit Permanentmagnet 43, Kugel-Gewinde-Getriebe mit Mutter 48 und Spindel 45 dargestellt. An der sich radial erstreckenden Wand des Motorgehäuses 41 ist ein sich im Wesentlichen axial erstreckendes Bauteil bzw. Lagerring 46 angebracht. Das Bauteil bzw. der Lagerring 46 bildet einen Innenstator und wirkt als magnetischer Rückschlussring und erstreckt sich dazu in den Rotor 44, wobei es mit kleinem Spalt parallel zum sich axial erstreckenden Schenkel des Rotors verläuft bis nahe an den sich radial erstreckenden Schenkel des Rotors. Vom Bauteil 46 erstreckt sich ein kurzer Schenkel 49 im rechten Winkel nach innen bis nahe an die Spindel 45 des Kugel-Gewindetriebes. Der Stator ist im Motorgehäuse 41 vorzugsweise eingeschrumpft. Am Bauteil bzw. Lagerring 46 sind die Lager 50,51 angeordnet, wobei das Lager 50 auf einer Seite des sich radial nach innen erstreckenden Abschnittes 49 und das Lager 51 auf der anderen Seite dieses Abschnittes angeordnet ist. An der Mutter 48 des Kugel-Gewinde-Getriebes ist ein Bauteil bzw. Lagerflansch 48a angebracht, insbesondere mittels Schweißverbindung oder Schraubverbindung. Das an der Mutter angebrachte Bauteil bzw. Lagerflansch oder Lagerhülse 48a nimmt einen Ring des Axiallagers 50 möglichst spielfrei auf und hat zum Radiallager 51 ein kleines radiale Spiel "s", damit bei einer positiv wirkenden Axiallast Fax das Axiallager 50 voll trägt. Am Ende des Lagerflansches ist ein Zahnrad-Sensortarget 60 auf dem Lagerflansch angeornet, insbesondere aufgepresst und axial mit einem Sicherungsring 52 fixiert. Zwischen Zahnrad 60 und Lager 51 ist eine Wellscheibe 53 angeordnet, wobei wahlweise, z.B. mittels Ausgleichscheiben ein axiales Spiel eingestellt und das Lager zur Geräuschreduzierung vorgespannt werden kann. Wenn ein Fehlerfall mit negativer axialer Kraft -Fax auftritt, so erfolgt die radiale Abstützung bzw. Lagerung mittels eines auf die Mutter des Kugel-Gewinde-Getriebes 48 aufgepressten Stützrings 47b. Dieser Fehlerfall ist relevant, wenn z.B. bei einer Bremsvorrichtung der Kolbenstößel 146 (siehe Figur 7) vom Pedalstößel 147 betätigt wird, wobei er auf der anderen Seite den Kolben eines Hauptzylinders betätigt und der Kolbenstößel in der Spindel 45 des Kugel-Gewinde-Getriebes klemmt. Dann wirkt die Pedalkraft über die Spindel und über die zusammengepresste Wellscheibe auf das Lager 51. Infolge der geringen Lagerreibung dreht sich die Mutter des Kugel-Gewinde-Getriebes und die Spindel bewegt sich axial und wirkt auf den gestrichelt angedeuteten Hauptzylinderkolben.

Der dünnwandige Rotor ist an der Mutter 48 des Kugel-Gewinde-Getriebes befestigt, z.B. verschweißt, kann aber auch angeschraubt werden. Auf dem sich axial erstreckenden Schenkel des Rotors sind Permanentmagnete 43 angebracht, insbesondere geklebt. Die Permanentmagnete können zusätzlich fixiert werden mittels einer (nicht dargestellten) Kunststoffumspritzung oder werden mittels eines Metallbechers eingeschlossen. Anstelle einer aufwendigen Einstellung des kleinen axialen Spiels kann ein Stützring 47b eingesetzt werden, der bei einer negativen Axialkraft das Kippspiel begrenzt, da das Axiallager durch das Spiel radial nicht mehr führen kann.

Figur 6 zeigt eine Lagerung mit einem Vierpunkt-Lager 55 mit geringem Spiel und somit geringem Kippspiel. Damit das Spiel nicht durch den Lagerflansch 48a beeinflusst wird , ist ein (aus Montagegründen) kleines Spiel zwischen dem Innenring des Lagers 55 und dem Flansch 48a vorgesehen. Axial ist der Innenring mit einer Wellscheibe 53 über einen Zwischenring 57, der auch Zahnradträger für einen Drehsensor sein kann und einen Sicherungsring 52 (siehe Fig. 5) verspannt. Alternativ zu den kleinen Spielen kann hier ein relativ großes Kippspiel vorgesehen sein, zusammen mit dem Stützring 47a am Stator oder am Lagerring. Dieser Stützring sitzt innerhalb einer zusätzlichen Statorlamelle 2a ohne Polzahn und wird zweckmäßig mittels Verkleben oder Verstemmen befestigt. Zur Vermeidung von magnetischen Verlusten ist dieser Ring magnetisch nicht leitend und kann auch zusätzlich am Umfang zur Vermeidung von Wirbelstromverlusten entsprechend strukturiert sein. Dieser Stützring ist auch wirksam bei Toleranzüberschreitung, um zu vermeiden, dass der Rotor sich an einem scharfkantigen Polzahn des Stators verhakt, wozu der Stützring zweckmäßig ein geschlossenes Ringlager bildet.

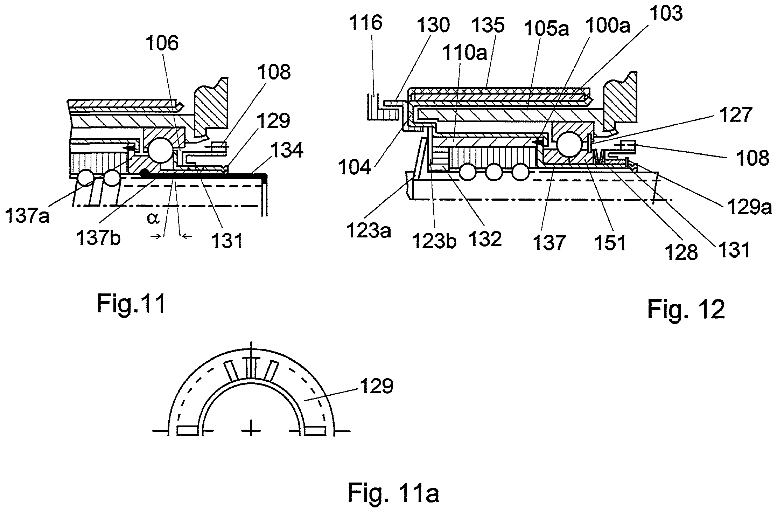

Figur 7 zeigt eine Lageranordnung mit einem Vierpunkt-Lager mit geteiltem Innenring. Der linke Innenring 55a ist mittels Pressung oder Schiebesitz mit dem Lagerflansch 48a verbunden. Dieser kann, entsprechend Figur 2, ein Teil der Mutter des Kugel-Gewinde-Getriebes sein oder mit der Mutter des Kugel-Gewinde-Getriebes verbunden, insbesondere angeschweißt sein. Alternativ kann er vorzugsweise als Tiefziehteil hergestellt sein, wie in Fig. 12 dargestellt und stellt die Verbindung zum Sensorantrieb 108 dar und ist zugleich die Lagerflanschhülse 137 für das darauf angeordnete Lager. Dadurch sind die Toleranzen relativ groß und bestimmen den Lagersitz und Schlag für den Rotor und das Sensorzahnrad bzw. -target. Hier bringt eine Lösung gemäß Figur 2 mit Integration des Flansches mit dem Kugel-Gewinde-Getriebe eine erhebliche Verbesserung, welche noch weiter verbessert werden kann durch Integration der Kugellaufbahn in das Kugel-Gewinde-Getriebe, (wie in Figur 8 dargestellt). Im Normalbetrieb wirkt eine positive Axialkraft +Fax über den Lagerinnenring 55a über einen Winkel von ca. 40 Grad zum Lageraußenring 59 wie ein Schrägkugellager. Bei negativer axialer Kraft im seltenen Fehlerfall wirkt die Kraft umgekehrt vom Lagerring 55 wieder über ca. 40 Grad (nach dem Spielausgleich) zum Außenring 59. Damit wirkt diese Lagerkonfiguration wie ein Schrägkugellager. In der Beschreibung wird wegen des gleichen Aufbaus der Begriff Vier-Punkt-Lager beibehalten.

Der Innenring 56 in Figur 7 wird zweckmäßig und insbesondere aus Kostengründen mit einem Zahnradträger mit aufgespritzen Zahnrad 60 kombiniert, wobei der Innenring wegen der relativ geringen Axialkraft und der nur seltenen Betätigung aus ungehärtetem Stahl hergestellt sein kann. Die axiale Fixierung erfolgt über eine Verstemmung des Innenringes 56 in eine Vertiefung, insbesondere Nut 56a des Lagerflansches 48a. Diese Lösung kann auch mit kleinem Spiel "s" auch ohne Stützring auskommen, mit Spieleinstellung über eine entsprechende Vorrichtung. Die axiale Fixierung kann über eine kraft- oder formschlüssige Verbindung 56a, wie Verstemmen oder Verschweißen, hergestellt werden. Der Vorteil des geteilten Innenringes besteht im Einsatz von mehr Kugeln, welche im Vergleich mit geschlossenem Außenring mit Innenring bei Figur 6 die Tragzahl des Lagers erhöhen. Es bietet sich an, dass insbesondere die Lösungen mit Vier-Punkt-Lager der Lagerring bzw. Innenstator mit dem Außenlagerring abgestimmt und ggf. miteinander gefertigt und geprüft werden um kleine Toleranzen zu garantieren. Hierbei ist auch wichtig, dass über die Messung der Anpresskraft der notwendige Festsitz geprüft werden kann. Dieser muss der negativen Axialkraft -Fax standhalten. Dies ist einfach möglich, indem der Innendurchmesser des Lagerringes 46 größer ist als der Innendurchmesser des Lagerringes 59.

Figur 8 zeigt eine Lösung mit zwei Axiallagern 50, 58, wobei eine Kugellaufbahn 50a in die Mutter des Kugel-Gewinde-Getriebes integriert ist. Das zweite Axiallager kann ein (nicht gezeichnetes) Nadellager sein oder ein Kugellager. Letzteres hat den Vorteil, dass der radiale Schleg des Flansches abrollend und nicht gleitend aufgenommen wird. Axial ist ein kleines Spiel sa zum Zwischenring 57 mit Zahnradträger bzw. 60 vorgesehen. Hier kann auch ein kleines Spiel wie in Figur 7 mit einer entsprechenden Vorrichtung eingestellt werden. Im Fehlerfall bei negativer Axialkraft und ohne definierte kleine Spieleinstellung hat das axiale Spiel zur Folge, dass das Axiallager nicht mehr in seiner Kugellaufbahn radial führt weshalb zweckmäßig ein als Außenlager wirkender Stützring 47c vorgesehen ist (bzw. Stützringe 47a, 47b gem. Fig. 5, 6). Der Stützring kann bei dieser und den anderen Ausführungen aus einem Gleitlager oder einem Kugellagering bestehen. Hierbei kann die Kugellaufbahn auch direkt in den Lagerring 46 integriert sein Die Fixierung erfolgt wiederum mittels Sicherungsring 52. Der Stützring kann auch am Außendurchmesser des Innenstators 47d wirken, z.B. integriert in den Lagerring 46. Im Fehlerfall ist auch ein Innenlager als Notlager zweckmäßig. Dieses übernimmt der zweite Lagerring 50 des Axiallagers der mit kleinem Spiel SR auf dem Lagerflansch 48a läuft.

Die Figuren zeigen eine Kombination von Fest- und Loslager kostengünstig und kleinbauend für alle Belastungsfälle.

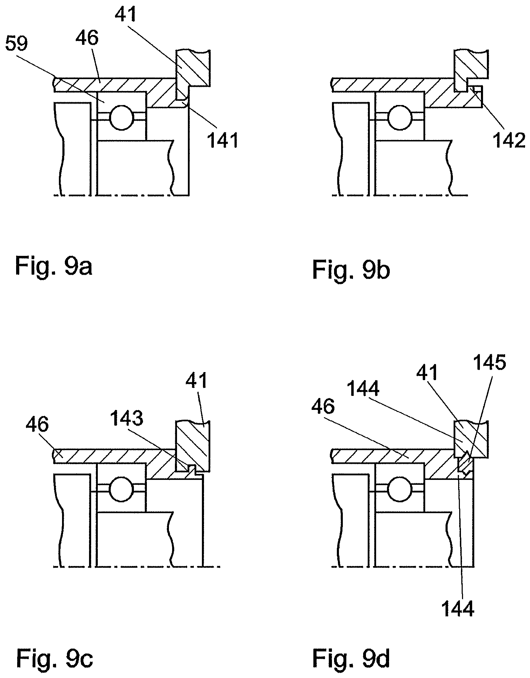

Die Figuren 9a bis 9d zeigen Befestigungsmöglichkeiten des Lagerringes 46 im Motorgehäuse 41 bzw. an dessen Wand. Wie beschrieben, besteht der Vorteil mit gleichem Ausdehnungskoeffizienten zwischen Lageraußenring (z.B. 59 in Figur 7) und Lagerring 46, z.B. aus Stahl, dass keine unterschiedliche Temperaturausdehnung erfolgt. Die größere Temperaturausdehnung des Motorgehäuses aus Aluminium oder Kunststoff würde sich wesentlich auf die kleinen Lagertoleranzen auswirken, wenn der Lagerring Teil des Motorgehäuses ist, d.h. aus demselben Werkstoff besteht. Dann wirken diese unterschiedlichen Temperaturausdehnungen voll auf das Lagerspiel. Auch kann eine negative Axialkraft auf das Lager nicht sicher aufgenommen werden. Dagegen bringt die Anordnung des Außenringes 59 im Lagerring 46 die o.g. Vorteile.

Figur 9a zeigt eine Verbördelung 141 des Lagerringes bzw. Innenstators 46 am Motorgehäuse 41. Diese Verbördelung kann über den gesamten Umfang oder auch nur an z.B. vier Segmenten vorgenommen werden. Figur 9b zeigt eine Verstemmung 142 an mehreren Segmenten. In Figur 9c ist eine Verstemmung 143 von Material aus dem Lagerring 46 in das Motorgehäuse an verschiedenen Segmenten, z.B. vier Segmenten vorgesehen. Bei der Ausführung gemäß Figur 9d ist der Lagerring 46 über einen Bund im Motorgehäuse zentriert. Das Motorgehäuse 41 und der Lagerring 46 haben kleine Rillen bzw. Nuten. In dies wird ein Ring 145, z.B. aus Weichaluminium durch Pressen verformt, so dass es zu einer formschlüssigen Verbindung kommt.

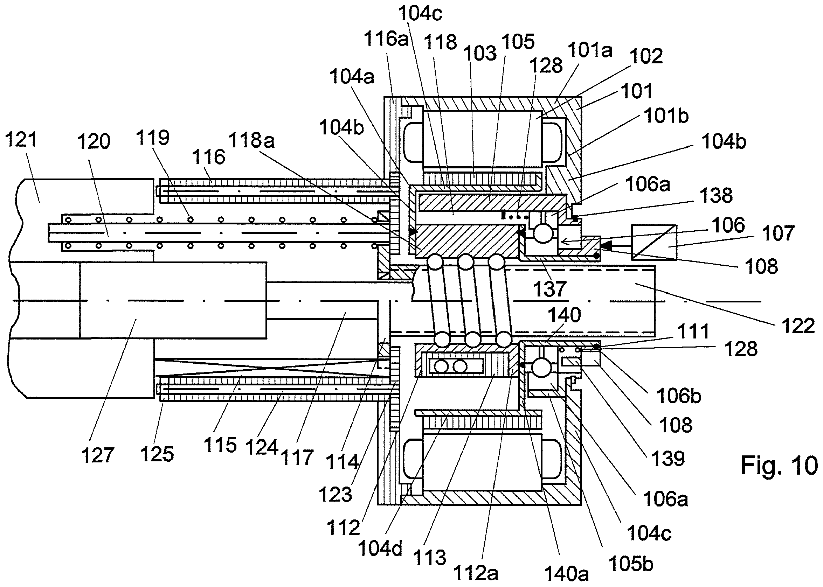

Fig. 10 zeigt einen prinzipiellen Aufbau der Antriebseinrichtung mit einem Elektromotor, mit Motorgehäuse 101, Stator mit Wicklung 102 und Rotor mit Permanentmagnet 103 und mit einem Kugel-Gewinde-Getriebe (KGT) 118, mit Mutter 118 und Spindel 122. Im oberen Bildteil ist ein Motor mit zwei Luftspalten dargestellt. Das Motorgehäuse 101 ist im dargestellten Längsschnitt im Wesentlichen topfförmig ausgebildet, mit einem zylindrischen Wandteil 101a und einem radial verlaufenden Seitenwandteil 101b. Auf der dem Seitenwandteil 101b gegenüberliegenden Seite ist ein radial verlaufendes Wandteil 116a eines Zwischenteiles bzw. Zwischengehäuses 116 angeordnet und mit dem zylindrischen Wandteil 101a des Motorgehäuses verbunden, so dass der Motor und der KGT komplett umschlossen werden.

Der Rotor weist ein Trägerteil bzw. Rotorhülse 104a mit im Längsschnitt im Wesentlichen U-förmiger Gestalt auf, an dessen äußerem, sich axial erstreckenden Schenkel 104c, die Permanentmagnete 103 befestigt sind. Der sich radial erstreckende Abschnitt bzw. Schenkel 104b der Rotorhülse 104a liegt mit seinem radial inneren Ende an der Außenseite der Mutter 118a des Kugel-Gewinde-Getriebes 118 an und ist dort mit dieser, insbesondere mittels Schweißen oder Schrauben, verbunden. Die Rotorhülse 104a, insbesondere deren sich axial erstreckender Abschnitt 104c ist dünnwandig ausgeführt und trägt die Magnete 103 und nimmt einen Teil des magnetischen Rückschlusses auf.

Ein Bauteil bzw. die Lagerhülse 105 ist mit einem Ende am radial verlaufenden Abschnitt 101b des Motorgehäuses 101 befestigt und erstreckt sich mit seinem freien Ende entlang des sich axial erstreckenden Abschnittes 104c des Rotors bis dicht an dessen radialen Abschnitt 104b. Die Befestigung kann auf verschiedene Weise erfolgen, zweckmäßig mittels eines gestuften bzw. gekröpften Abschnittes, der in eine Öffnung im Motorgehäuse 101 eingreift und mittels eines Sicherungsringes 138 oder mittels einer anderen, insbesondere formschlüssigen Verbindung. Die Lagerhülse 105 wirkt als Innenstator und übernimmt den Rest des Rückflusses der Magnete.

Zur Lagerung des Rotors ist ein Vier-Punkt-Lager 106 vorgesehen, das mit seinem Außenring 106a innen im Lagerteil 105 fest sitzt, wobei der Außenring an einer vom Lagerteil 105 gebildeten Schulter anliegt. Der äußere Lagerring 106a ist geteilt ausgeführt kann mittels einer am Lagerteil 105 abgestützten Feder 128 vorgespannt sein. Er kann auch ungeteilt sein, wie in der unteren Bildhälfte ausgeführt. Der innere Lagerring 106b ist hier ungeteilt ausgeführt und sitzt fest auf einer Lagerflanschhülse 137, die im dargestellten Längsschnitt jeweils L-förmig gestaltet ist. Der radial verlaufende Abschnitt der Hülse 117 liegt an der Mutter 118 des Kugel-Gewinde-Getriebes an und ist form- oder kraftschlüssig, insbesondere wie in dargestellt, mittels Schweißen, daran befestigt. Auf dem sich axial erstreckenden Abschnitt der Hülse 137 ist ferner ein Sensorrad 108 eines Motorsensors 107 angeordnet und kraft- oder formschlüssig, insbesondere wie dargestellt mittels Schweißen verbunden. Zwischen dem Sensorrad 108 und dem inneren Lagerring 6b kann eine federnde Einrichtung oder ein Distanzring vorgesehen sein.

Die Lagerung ist damit so ausgeführt, dass ein einziges Lager ausreicht, wobei im Wesentlichen alle vom Lager übertragenen Kräfte einseitig in das Motorgehäuse, insbesondere dessen radial verlaufenden Abschnitt, eingeleitet werden.

In der unteren Bildhälfte ist der Ein-Luftspalt-Motor dargestellt. Hierbei ist ein Lagerteil 105b vorgesehen, das wie oben bzgl. des Lagerteils 105 beschrieben, am Motorgehäuse 101 befestigt ist, jedoch nur relativ kurz ausgeführt ist. Das Lagerteil 105b kann auch einstückig mit dem Gehäuse ausgebildet sein. Der Rotorhülse 104d dieser Ausführung ist, zumindest in seinem axial verlaufenden Abschnitt, abhängig von den eingesetzten Magneten, dickwandiger ausgebildet, wobei der Rückfluss der Magnete nach üblicher Motorentechnik über die Magnete selbst oder den Rotormantel verläuft.

Der äußere Lagerring 106a des Vier-Punkt Lagers ist bei dieser Ausführung ungeteilt und sitzt fest in dem Lagerteil 105b. Der innere Lagerring 106b ist geteilt ausgeführt und sitzt fest oder mit Schiebesitz auf einer Lagerhülse 140, die wie die Hülse 137, mit einem sich radial erstreckenden Abschnitt 140a an der Mutter des Kugel-Gewinde-Getriebes befestigt ist. Der radiale Abschnitt 140 a ist hierbei verlängert ausgeführt und mit der Rotorhülse 4d durch entsprechende Formgebung verbunden. Wie bei der in der oberen Hälfte dargestellten Ausführung sitzt auf der Hülse 140 ein Sensorrad für einen Motorsensor, wobei zwischen Sensorrad und Lagerring eine federnde Einrichtung 128 vorgesehen ist.

Der äußere Lagerring des Vier-Punkt-Lagers bestimmt im Wesentlichen den unerwünschten Kippwinkel und damit der Exzentrizität des Rotors. Vorteilhaft wirkt sich daher erfindungsgemäß das genaue Einpressen des Außenringes in das Lagerteil 105 bzw. 105b aus und die resultierende Parallelität der Kugellaufbahn zum Bund des Lagerteils 105 bzw. 5b der im Motorgehäuse 101 aufliegt und ggf. die Fertigung bzw. Montage zusammen mit dem Lagerring 105 bzw. 105b, um möglichst kleine Toleranzen zu erhalten. Die kleine Toleranzkette bringt erhebliche Vorteile. Auch der Stator wird rechtwinklig zu dieser Auflage im Motorgehäuse eingepresst oder geschrumpft. Die Lagerteile 105 bzw.105b werden z.B. über Sicherungsring 138 am Motorgehäuse 101 fixiert oder alternativ verstemmt oder eingebördelt. Die Lagerflanschhülse 137 bzw. 140 und der Rotor 104a bzw. 104d sind form- oder kraftschlüssig mit der Mutter 48 des Kugel-Gewinde-Getriebes verbunden. Die Hülse 140 nimmt den Innenring des Vier-Punkt-Lagers auf mit relativ kleinen Toleranzen als leichten Schiebe- oder Presssitz. Das Vier-Punkt-Lager kann einen geteilten Innenring oder einen geteilten Außenring aufweisen. Besonders vorteilhaft ist ein geteilter Innenring in Verbindung mit einer Vorspannung des Lagers. Die Vorspannung erfolgt durch federnde Elemente. Bei der Anwendung der Antriebseinrichtung zur Bremsdruckmodulation wirken vor allem axiale Kräfte durch die Druckkraft, die vom Hauptzylinderkolben ausgeht, aber auch radiale Kräfte, infolge der Momentenabstützung und Ankoppelung der Spindel an den Hauptzylinderkolben bei Spindelschlag und zusätzliche radiale Kräfte durch den Rotor. Im Normalfall überwiegen die Axialkräfte, im Grenzfall bei extrem kleinem Druck kann die Axialkraft negativ wirksam sein, was durch die Vorspannung des Lagers bzw. des geteilten Lagerringes mit wenig Spiel zur Kugel auffangen lässt.

Der Rotor bzw. die Rotorhülse 104a und die Hülse 137 sind in der oberen Ausführung getrennt ausgebildet, was vorteilhaft ist für die Magnetmontage auf dem Rotor, die unabhängig vom KGT-LagerEinheit erfolgen kann. Bei der in der unteren Bildhälfte dargestellten Ausführung ist der Rotor 104d mit der Hülse 140 verbunden was für die Montage schwieriger ist. Hierbei muss der Rotor bereits mit Magneten bestückt sein, bevor er mit KGT und 4-Punkt-Lager komplettiert wird. Der äußere Lagerring kann auch, geteilt oder ungeteilt, direkt in das Lagerteil 105 bzw. 105b eingearbeitet sein.

Bei einer Fehlansteuerung des Motors kann dieser unterstützt durch die Druckkraft z.B. des Hauptzylinderkolbens eines Bremssystems die Spindel mit Kupplungsflansch 114 gegen die Mutter 118a des Kugel-Gewinde-Getriebes 118 fahren, was durch Stoßbelastung das Kugel-Gewinde-Getriebe zu stark belasten würde oder ggf. die Mutter in Gegenrichtung bewegt und damit auch den Innenring des Vier-Punkt-Lagers. Es ist daher ein Anschlag mit Spiel "s" für eine derartige Bewegung durch einen Distanzring 139 in Fig. 10 oder entsprechenden Abstand "s" von Zahnradträger 131 zum Sensorrad 108 in Fig. 11. Es ist einen Anschlagplatte 123 am Zwischengehäuse 116 vorgesehen auf die der Kupplungsflansch 114 aufläuft oder ein Anschlag durch eine Feder 123a, welche auf eine Anschlagscheibe 123b aufläuft (Fig.12). Die Anschlagplatte 123 ist über elastische Bolzen 124 mit dem Zwischengehäuse 116 verbunden.

Dadurch kann im beschriebenen Fall eine Beschädigung vermieden werden.

Die Spindel 122 des Kugel-Gewinde-Getriebes läuft mit kleinem Spiel in der Spindelmutter 118a. Hierbei besteht die Gefahr, dass die gefettete Spindel Fremdpartikel aufnimmt und in die Mutter einschleppt, was letztlich zu einem Blockieren führen kann. Gefährdet ist insbesondere der Bereich, in dem z.B. vom Sensorzahnrad Abrieb auf die Spindel gelangt oder auch vom Rotor, wenn er z.B. eine Ummantelung aus Kunststoff als Magnetschutz aufweist. Auch können von der Feder 123a des Spindelanschlages Verschleißpartikel auf die Spindel gelangen. Für den ersten Fall ist eine Spindelschutzkappe 134 mit der Hülse 137 verbunden (Fig. 11). Für den Rotorschutz ist mit diesem eine Schutzhülse 130 verbunden, die in das Zwischengehäuse 116 eintaucht und somit ein Labyrinth bildet (Fig.12).

Zur Reduzierung der Drehmasse ist die Mutter 118a des Kugel-Gewinde-Getriebes mit einer Ausnehmung versehen, wie in der unteren Bildhälfte zu sehen ist, die zur Aufnahme eines Kugelkäfigs 113 frei gespart ist, wobei die beiden schmalen, die Ausnehmung begrenzenden Flansche 112 und 112a seitliche Begrenzungen der Ausnehmung bilden. Diese Flansche sind in der Formgestaltung auf minimale Drehmasse ausgebildet. Die Kugelrückführung erfolgt in einem Kugelkäfig 113, vorzugsweise in einem Kunststoffkäfig. Dabei kann die Kugelrückführung ein- oder zweireihig parallel oder unter einem bestimmten Winkel zur Achse 30 - 60° erfolgen. Durch diese offene Gestaltung kann die Drehmasse des KGT bis zu 70 % reduziert werden.

Der Spindelantrieb erfordert eine Rückstellung, die besonders einfach über einen Kupplungsflansch 114, der mit der Spindel 122 drehfest verbunden ist und axial abgestützt wird. Eine, bzw. vorzugsweise zwei, Rückstellfedern 119, stützen sich am Flansch 114 ab und werden von einem Führungsbolzen 120 geführt, der im Gehäuse 121 oder auch zusätzlich im Zwischengehäuse 116 gelagert ist.

Die Moment-Abstützung erfolgt über denselben Kupplungsflansch 114, welcher auch vorzugweise um 180° versetzte zwei Stege 115 greift.

Der Kupplungsflansch kann auch (nicht gezeichnet) als Oldham-Kupplung ausgeführt werden, um den Spindelschlag während einer Drehung um 360 Grad auszugleichen. Die gezeichnete Ankopplung an den Steg 115 ermöglicht nur eine Bewegung über 180 Grad.

Das Antriebselement 127, z. B. ein Kolben, wird vorzugsweise von einem Koppelelement 130 betätigt, welches mit der Spindel 122 verbunden ist, um bei einer Bewegung der Spindel in beiden Richtungen mitgenommen zu werden.

Figur 11 zeigt ausschnittsweise eine andere Ausführung der Lagerung des Rotors. Hierbei wird der geteilt ausgeführte Innenring des Vier-Punkt-Lagers 106 einerseits von einem hülsenförmigen inneren Lagerring 137b gebildet, der mit der Mutter des Kugel-Gewindeantriebes verbunden, insbesondere verschweißt, ist und der sich axial über das Lager hinaus erstreckt. Auf diesem Lagerring 137b sitzt eine Hülse als Zahnradträger 131 ähnlich der oben bzgl. Fig. 10 beschriebenen Hülse. Die Hülse 131 weist einen radialen Abschnitt auf, der federnd an den Kugeln des Lagers anliegt. Durch die Anstellung bzw. Verlauf des radialen Abschnittes (Winkel alpha) kann der Eingriffswinkel der Kugelanlage und damit Radius optimiert werden. Die Hülse 131 ist vorzugsweise mittels formschlüssiger Verbindung bzw. Verformung 129 mit dem hülsenförmigen Lagerring verbunden, wie dies aus Fig. 11a ersichtlich ist. Auf der Hülse sitzt wiederum ein Sensorrad 108 eines Motorsensors. Innerhalb des Lagerringes 137b kann eine zusätzliche dünne Hülse 134 eingestemmt werden, welche sich insbesondere über die gesamte, jenseits der KGT-Mutter liegende Länge der Spindel erstreckt und diese gegen anfallende Fremdpartikel schützt.

In Figur 12 ist eine weitere Ausführungsform des Rotors und der Lagerung dargestellt. Die Rotorhülse 104 weist hier im dargestellten Längsschnitt eine im Wesentlichen U-förmige Gestalt auf, die das als Innenstator wirkende Lagerteil 105a umgreift. An der Außenseite der Rotorhülse 104 sind Permanentmagnete 103 angebracht, die mit einer Schutzumhüllung versehen sind. Der innenliegende Schenkel der Rotorhülse 104 sitzt auf einer Hülse 110a, die ihrerseits auf der Mutter des Kugel-Gewinde-Getriebes sitzt. An der Stirnseite der Hülse 110a ist die Lagerhülse 137 befestigt, insbesondere mittels Schweißen, wobei ein umgebogenes Ende der Rotorhülse das radial außenliegende Ende der Lagerhülse umgreift. Mit 116 ist ein Endstück eines Zwischengehäuses bezeichnet. Am Rotor ist eine im Längsschnitt etwa L- oder Z-förmige Schutzhülse 130 angebracht, die den Zwischenraum zwischen Rotor und Zwischengehäuse vor Fremdkörpern schützt. Eine sich an der Spindel einerseits und einer Abstützplatte 123b andrerseits abstützende Feder 123a wirkt als Spindelanschlagfeder. Zwischen der Abstützplatte 123b und dem Ende der Mutter des Kugel-Gewinde-Getriebes ist ein Schutzring 132 angeordnet.

Das Vier-Punkt-Lager weist hier einen geteilten Innenring 151 auf, der auf dem sich axial erstreckenden Abschnitt der Lagerhülse sitzt. Die Innenringe sind bei diesem Beispiel so dimensioniert, dass sich bei Anlage an den benachbarten Ring ein kleines Spiel zu den umlaufenden Kugeln ergibt, was ein nur kleines Kippspiel zur Folge hat. Auf der Außenseite des Lagers ist ein Dichtring 127 angebracht. Zwischen dem Innenring des Lagers und einem auf der Lagerhülse mittels einer formschlüssigen Verbindung fest angebrachten Zahnradträger 131 ist eine federnde Vorspanneinrichtung 128 vorgesehen, die hier aus zwei Tellerfedern besteht. Die Erfindung ist in der Beschreibung am Beispiel eines Innenläufermotors dargestellt; sie ist auch bei Außenläufern anwendbar.

### Bezugszeichenliste

- 1: Motorgehäuse
- 1a: zylindrischer Wandteil
- 1b: Seitenwandteil
- 2: Stator mit Wicklung
- 2a: Statorlamelle
- 3: Permanentmagnete
- 4: Rotorhülse
- 4a: U-förmiger Abschnitt
- 4b: radialer Abschnitt
- 4c: axialer Abschnitt
- 4d: vereinfachte Rotorhülse
- 4e: Rotorhülse
- 5: Innenstator
- 5a: Lagerhülse
- 5b: kombinierte Lagerhülse/Innenstator mit Lagersitz
- 6: Axiallager
- 7: Motorsensor
- 8: Sensorrad
- 9: Festlager
- 10: Rotorfixierung
- 11: Sensorradfixierung
- 12: KGT-Flansch
- 13: Kugelkäfig
- 13a: KGT-Flansch
- 13b: Lagerhülse
- 14: Kupplungsflansch
- 15: Steg zur Md-Abstützung
- 16: Zwischengehäuse
- 16a: Wandteil
- 17: Radiallager
- 18: Kugel-KGT-Mutter
- 19: Spindelrückstellfeder
- 20: Führungsbolzen
- 21: Gehäuse für Antrieb
- 22: Spindel
- 23: Magnetfixierhülse
- 24: Ausdrückung
- 25: Schutzhülse
- 26: Umspritzung
- 27: Antriebselement
- 28: Abstandshülse
- 29: Loch im Rotor
- 30: Koppelelement
- 41: Motorgehäuse
- 42: Wicklung
- 43: Permanentmagnet
- 44: Rotor
- 45: Spindel
- 46: Bauteil bzw. Lagerring
- 47a: Stützring am Stator
- 47b: Stützring an KGT-Mutter
- 47c: Stützring an Lagerring
- 47d: Stützring
- 48: Mutter des Kugel-Gewinde-Getriebes
- 48a: Bauteil bzw. Lagerflansch
- 48b: Zentrierbund
- 49: Schenkel
- 50: Axiallager
- 50a: integr. Kugellaufbahn
- 51: Radiallager
- 52: Sicherungsring
- 53: Wellscheibe
- 55: Vier-Punkt-Lager ungeteilt
- 55a: Vier-Punkt-Lager geteilt
- 56: Lagerring
- 56a: kraft- oder formschlüssige Verbindung
- 57: Zwischenring
- 58: Axialkugellager
- 59: Lageraußenring
- 59a: Lagerring
- 60: Zahnrad bzw. Sensortarget
- 101: Motorgehäuse
- 101a: zylindrischer Wandteil
- 101b: Seitenwandteil
- 102: Stator mit Wicklung
- 103: Permanentmagnete
- 104a: Rotorhülse
- 104b: radialer Abschnitt
- 104c: axialer Abschnitt
- 104d: alternative Rotorhülse
- 105: Lagerhülse bzw. Bauteil
- 105a: kombinierte Lagerhülse/Innenstator
- 105b: Lagerteil
- 106: 4-Punkt-Lager
- 106a: Lagerring
- 107: Motorsensor
- 108: Sensorrad
- 110: Hülse
- 110a: Flanschfixierung
- 111: Sensorradfixierung
- 112: KGT-Flansch
- 113: Kugelkäfig
- 114: Kupplungsflansch
- 115: Steg zur Momentabstützung
- 116: Zwischengehäuse
- 116a: Wandteil
- 118: Kugel-Gewinde-Getriebe (KGT)
- 118a: Mutter des KGT
- 119: Spindelrückstellfeder
- 120: Führungsbolzen
- 121: Gehäuse
- 122: Spindel
- 123: Spindelanschlagplatte
- 123a: Feder
- 123b: Ring
- 124: Bolzen
- 125: Mutter
- 126: Antriebselement
- 127: Dichtung
- 128: Vorspannfeder
- 129: Verbindung, formschlüssig
- 129a: Sicherungsring
- 130: Schutzhülse
- 131: Zahnradträger
- 132: Schutzring
- 133: Kugelkäfig
- 134: Spindelschutzkappe
- 135: Magnetschutz
- 136: Sicherungsring
- 137: Lagerflanschhülse
- 137a: Lagerflansch mit integr. Kugellaufbahn
- 138: Sicherungsring
- 139: Distanzring
- 140: Hülse
- 140a: Flansch
- 141: Bördelung
- 142: Ring- bzw. Segmentverstemmung
- 143: Ring- bzw. Segmentverstemmung
- 144: Rille zw.Nut
- 145: Ring
- 146: Ring-Pressverstemmung
- 147: Pedalstößel
- 148: Rotorverschraubung
- 151: Lager-Innenring

## Patentansprüche

1. Antriebseinrichtung, mit einem Innenläufer-Motor und einem Getriebe, mit einem Motorgehäuse, einem Stator mit Wicklung und mit einem Rotor mit mindestens einem Permanentmagneten, wobei das Motorgehäuse ein sich auf einer Seite des Stators im Wesentlichen radial erstreckendes Gehäuseteil (1b, 41) aufweist, **dadurch gekennzeichnet, dass** das Getriebe ein Kugel-Gewinde-Getriebe ist, das eine mit dem Rotor verbundene Mutter (18, 48, 118a) aufweist, und dass an dem Gehäuseteil (1b, 41) und/oder einem damit fest verbundenen Bauteil (5,46) das einzige oder alle Lager (6, 9, 17, 50, 50a, 51, 55, 55a, 59, 106, 106a) für den Rotor und die Mutter (18,48, 118a) angeordnet ist bzw. sind.

2. Antriebseinrichtung, mit einem Innenläufer-Motor und einem Getriebe, mit einem Motorgehäuse, einem Stator mit Wicklung und mit einem Rotor mit mindestens einem Permanentmagneten, wobei zur Lagerung des Rotors und eines drehenden Getriebeteiles zumindest ein Lager vorgesehen ist, insbesondere nach Anspruch 1, **dadurch gekennzeichnet, dass** das Getriebe ein Kugel-Gewinde-Getriebe ist, das eine mit dem Rotor verbundene Mutter (18, 48, 118a) aufweist, und dass das bzw. die Lager (6, 9, 17, 50, 50a, 51, 55, 55a, 106, 106a) auf einem mit der Mutter (18,48, 118a) verbundenen bzw. integrierten Bauteil (4b,13b,48a,56,140a) angeordnet sind.

3. Antriebseinrichtung nach einem der vorhergehenden Ansprüche, **dadurch gekennzeichnet, dass** das mit dem drehenden Getriebeteil verbundene bzw. integrierte Bauteil (4b,13b,48a,56,140a) mit einem Sensorantrieb (8,60,108) verbunden ist.

4. Antriebseinrichtung nach einem der vorhergehenden Ansprüche, **dadurch gekennzeichnet, dass** ein Lager (50) teilweise (50a) in das drehende Getriebeteil (48) integriert ist.

5. Antriebseinrichtung nach einem der vorhergehenden Ansprüche, **dadurch gekennzeichnet, dass** eine Vorrichtung (15,16,115,115a,160) zur Abstützung des Drehmomentes des nichtdrehenden Getriebeteiles vorgesehen ist und dass diese Einrichtung insbesondere auf der Lagerung gegenüberliegenden Seite des drehenden Getriebeteiles (18,48, 118a) vorgesehen ist, und dass insbesondere die Einrichtung (14, 15) zur Abstützung des Drehmomentes außerhalb des Motorgehäuses (1), insbesondere in einem Zwischengehäuse (16) oder/und einem Gehäuse (21) des Antriebes angeordnet ist, in welchen insbesondere auch Kolben eines Hauptzylinders angeordnet sind.

6. Antriebseinrichtung nach einem der vorhergehenden Ansprüche, **dadurch gekennzeichnet, dass** das mit dem Gehäuse verbundenen Bauteil bzw. Lagerbauteil (5,46) auf einer Seite des Motorgehäuses(1) mit diesem, insbesondere mittels Verbördelung oder Verstemmung, verbunden ist, und dass insbesondere zwischen dem Lagerbauteil (46) und dem Motorgehäuse ein Ring (145) angeordnet ist, mittels dem eine formschlüssige Verbindung gefertigt ist

7. Antriebseinrichtung nach einem der vorhergehenden Ansprüche, **dadurch gekennzeichnet, dass** das mit dem Gehäuse verbundene Bauteil (5,46) einen Innenstator bildet.

8. Antriebseinrichtung nach einem der vorhergehenden Ansprüche, **dadurch gekennzeichnet, dass** der Rotor mit dem drehenden Teil bzw. der Mutter (18, 48, 118a) des Kugel-Gewinde-Getriebes form- oder kraftschlüssig verbunden ist.

9. Antriebseinrichtung nach einem der vorhergehenden Ansprüche, **dadurch gekennzeichnet, dass** der Motor zwischen Stator und Rotor einen oder zwei Luftspalte aufweist.

10. Antriebseinrichtung nach einem der vorhergehenden Ansprüche, **dadurch gekennzeichnet, dass** nur ein Lager für den Rotor und das drehende Getriebeteil vorgesehen ist, das insbesondere als Vier-Punkt-Lager (55,55a,59) oder Doppel-Schrägkugellager ausgebildet ist.

11. Antriebseinrichtung nach einem der vorhergehenden Ansprüche, **dadurch gekennzeichnet, dass** eine kraft- oder formschlüssige Verbindung (56a) zwischen der Mutter (48) des Kugel-Gewinde-Getriebes und einem Lagerring des Lagers (56) vorgesehen ist, so dass ein Spiel (s) und ggf. ein Kippspiel insbesondere bei einem Vier-Punkt-Lager zwischen dem inneren Lagerring (55a) und dem äußeren Lagerring (56) eingestellt werden kann.

12. Antriebseinrichtung nach einem der vorhergehenden Ansprüche, **dadurch gekennzeichnet, dass** der innere Lagerring oder der äußere Lagerring des Vier-Punkt-Lagers (55a, 137) geteilt ausgeführt ist.

13. Antriebseinrichtung nach einem der vorhergehenden Ansprüche, **dadurch gekennzeichnet, dass** das Kugel-Gewinde-Getriebe, der Lagerring (46) und das Lager und ggf. das Sensortarget bzw. Sensorrad eine Drehsensors eine Montageeinheit bilden.

14. Antriebseinrichtung nach einem der vorhergehenden Ansprüche, **dadurch gekennzeichnet, dass** eine Abstützeinrichtung (47a,47b,47c,47d), insbesondere ein Stützring, für die umlaufenden Teile des Motors bzw. Getriebes vorgesehen ist, wobei die Abstützeinrichtung bzw. der Stützring insbesondere an der Mutter des Kugel-Gewinde-Antriebes, dem Stator oder dem mit dem Gehäuse verbundenen Bauteil (5,46)angeordnet ist.

15. Antriebseinrichtung, mit einem Innenläufer-Motor, mit einem Motorgehäuse, einem Stator mit Wicklung und mit einem Rotor mit mindestens einem Permanentmagneten, wobei das Motorgehäuse einen sich auf einer Seite des Stators im Wesentlichen radial erstreckenden Gehäuseteil aufweist und der Rotor zumindest zwei Rotorlager aufweist, **dadurch gekennzeichnet, dass** an dem sich im Wesentlichen radial erstreckenden Gehäuseteil (1b) bzw. an einem damit verbundenen, sich im Wesentlichen axial erstreckenden Teil (5) die Rotorlager (6,9,17) angeordnet sind, wobei das Getriebe ein Kugel-Gewinde-Getriebe ist, das eine mit dem Rotor verbundene Mutter (18, 48, 118a) aufweist.

## Claims

1. Drive device, comprising an internal rotor motor and a gear transmission, a motor housing, a stator with winding and
a rotor with at least one permanent magnet, wherein the motor housing has a housing part (1b, 41) extending essentially radially on one side of the stator, **characterised in that** the gear transmission is a ball-screw transmission, having a nut (18, 48, 118a) connected to the rotor, and **in that** the one or all bearing(s) (6, 9, 17, 50, 50a, 51, 55, 55a, 59, 106, 106a) for the rotor and the nut (18, 48, 118a) is/are arranged on the housing part (1b, 41) and/or on a component (5, 46) firmly connected to the housing part (1b, 41).

2. Drive device, comprising an internal rotor motor and a gear transmission, a motor housing, a stator with winding, and a rotor with at least one permanent magnet, wherein at least one bearing is provided, in particular according to claim 1, for supporting the rotor and a rotating gear transmission part, **characterised in that** the gear transmission is a ball-screw transmission, having a nut (18, 48, 118a) connected to the rotor, and **in that** the bearing or bearings (6, 9, 17, 50, 50a, 51, 55, 55a, 59, 106, 106a) is/are arranged on a component (4b 13b, 48a, 56, 140a) connected or integrated with the nut (18, 48, 118a).

3. Drive device according to any one of the preceding claims, **characterised in that** the component (4b, 13b, 48a, 56, 140a) connected to or integrated with the rotating gear transmission part is connected to a sensor drive (8, 60, 108).

4. Drive device according to any one of the preceding claims, **characterised in that** a bearing (50) is partly (50a) integrated into the rotating gear transmission part (48).

5. Drive device according to any one of the preceding claims, **characterised in that** a device (15, 16, 115, 115a, 160) is provided for supporting torque of a non-rotating gear transmission part, and **in that** this device is in particular provided on a side of the rotating gear transmission part (18, 48, 118a) which is opposite the bearing support, and **in that** in particular the device (14, 15) for supporting the torque is arranged outside the motor housing (1), in particular in an intermediate housing (16) and/or a housing (21) of the drive in which in particular pistons of a master cylinder are also arranged.

6. Drive device according to any one of the preceding claims, **characterised in that** the component or bearing component part (5, 46) connected to the housing is connected on one side of the motor housing (1) to the same in particular by means of crimping or caulking, and **in that** in particular between the bearing component part (46) and the motor housing a ring (145) is arranged, by means of which a form-fit connection is created.

7. Drive device according to any one of the preceding claims, **characterised in that** the component (5, 46) connected to the housing forms an inner stator.

8. Drive device according to any one of the preceding claims, **characterised in that** the rotor is connected in a positive or non-positive fit manner to the rotating part or to a nut (18, 48, 118a) of the ball screw assembly.

9. Drive device according to any one of the preceding claims, **characterised in that** the motor has one or two air gaps between the stator and the rotor.

10. Drive device according to any one of the preceding claims, **characterised in that** only one bearing is provided for the rotor and the rotating gear transmission part, the bearing being designed in particular as a four-point contact bearing (55, 55a, 59) or a double angular contact ball bearing.

11. Drive device according to any one of the preceding claims, **characterised in that** a positive or non-positive fit connection (56) is provided between the nut (48) of the ball screw assembly and a bearing ring of the bearing (56a), so that a clearance (s) and possibly a pivot clearance can in particular be set between the inner bearing ring (55a) and an outer bearing ring (56).

12. Drive device according to any one of the preceding claims, **characterised in that** the inner bearing ring or the outer bearing ring of the four-point contact bearing (55a, 137) is designed split.

13. Drive device according to any one of the preceding claims, **characterised in that** the ball screw assembly, the bearing ring (46) and the bearing and possibly the sensor target or sensor wheel of a rotation sensor form an assembly unit.

14. Drive device according to any one of the preceding claims, **characterised in that** a support device (47a, 47b, 47c, 47d), in particular a support ring, is provided for the rotating parts of the motor or gear transmission, wherein the support device, or the support ring, is in particular arranged on the nut of the ball screw assembly, on the stator or on the component (5, 46) connected to the housing.

15. Drive device, comprising an internal rotor motor, a motor housing, a stator with winding and a rotor with at least one permanent magnet, wherein the motor housing has a housing part extending essentially radially on one side of the stator, and the rotor has at least two rotor bearings, **characterised in that** on the motor housing part (1b) extending essentially radially or on a part (5) connected to this and extending essentially axially the rotor bearings (6, 9, 17) are arranged, wherein the gear transmission is a ball-screw transmission, comprising a nut (18, 48, 118a) connected to the rotor.

## Revendications

1. Dispositif d'entraînement, comportant notamment un moteur à induit intérieur et une transmission, pourvu d'un boîtier moteur, d'un stator à enroulement et d'un rotor présentant au moins un aimant permanent, le boîtier moteur présentant une partie de boîtier (1b, 41) s'étendant sensiblement radialement sur un côté du stator, **caractérisé en ce que** la transmission est une transmission à vis à billes, laquelle présente un écrou (18, 48, 118a) relié au rotor, et **en ce que** le seul palier ou tous les paliers (6, 9, 17, 50, 50a, 51, 55, 55a, 59, 106, 106a) est ou sont agencé(s) pour le rotor et l'écrou (18, 48, 118a) sur la partie de boîtier (1b, 41) et/ou sur un composant y étant fermement relié (5, 46).

2. Dispositif d'entraînement, comportant notamment un moteur à induit intérieur et une transmission, pourvu d'un boîtier moteur, d'un stator à enroulement et d'un rotor présentant au moins un aimant permanent, où l'on prévoit au moins un palier pour le logement du rotor et d'un élément de transmission tournant, notamment selon la revendication 1, **caractérisé en ce que** la transmission est une transmission à vis à billes, laquelle présente un écrou (18, 48, 118a) relié au rotor, et **en ce que** le palier et/ou les parliers (6, 9, 17, 50, 50a, 51, 55, 55a, 106, 106a) est/sont agencé(s) sur un composant (4b, 13b, 48a, 56, 140a) intégré ou relié à l'écrou (18, 48, 118a).

3. Dispositif d'entraînement selon l'une des revendications précédentes, **caractérisé en ce que** le composant (4b, 13b, 48a, 56, 140a) intégré ou relié à l'élément de transmission tournant est relié à un entraînement par détecteurs (8, 60, 108).

4. Dispositif d'entraînement selon l'une des revendications précédentes, **caractérisé en ce qu'**un palier (50) est intégré partiellement (50a) dans l'élément de transmission tournant (48).

5. Dispositif d'entraînement selon l'une des revendications précédentes, **caractérisé en ce que** l'on prévoit un dispositif (15, 16, 115, 115a, 160) pour l'appui du moment de rotation de l'élément de transmission non tournant et **en ce que** l'on prévoit ce dispositif notamment sur le côté opposé du logement de l'élément de transmission tournant (18, 48, 118a), et **en ce que** notamment le dispositif (14, 15) est agencé pour l'appui du moment de rotation à l'extérieur du boîtier moteur (1), notamment dans un boîtier intermédiaire (16) et/ou un boîtier (21) de l'entraînement, dans lequel sont agencés notamment également des pistons d'un cylindre principal.

6. Dispositif d'entraînement selon l'une des revendications précédentes, **caractérisé en ce que** le composant ou le composant de palier (5, 46) relié au boîtier sur un côté du boîtier moteur (1) est relié avec celui-ci, notamment à l'aide d'un bridage ou sertissage, et **en ce qu'**une bague (145) est agencée notamment entre le composant du palier (46) et le boîtier moteur à l'aide de laquelle l'on réalise un raccord par liaison de forme.

7. Dispositif d'entraînement selon l'une des revendications précédentes, **caractérisé en ce que** le composant (5, 46) relié au boîtier forme un stator intérieur.

8. Dispositif d'entraînement selon l'une des revendications précédentes, **caractérisé en ce que** le rotor est relié par liaison de forme ou de force à la partie tournante ou l'écrou (18, 48, 118a) de la transmission à vis à billes.

9. Dispositif d'entraînement selon l'une des revendications précédentes, **caractérisé en ce que** le moteur présente, entre le stator et le rotor, un ou deux entrefers.

10. Dispositif d'entraînement selon l'une des revendications précédentes, **caractérisé en ce que** l'on prévoit seulement un palier pour le rotor et l'élément de transmission tournant, lequel est conçu en tant que palier à quatre points (55, 55a, 59) ou palier à double roulement à billes.

11. Dispositif d'entraînement selon l'une des revendications précédentes, **caractérisé en ce que** l'on prévoit un raccord par liaison de force ou de forme (56a) entre l'écrou (48) de la transmission à vis à billes et une bague de palier du palier (56), de sorte à pouvoir régler un jeu (s) et éventuellement un jeu de basculement, notamment lors d'un palier à quatre points entre la bague de palier intérieure (55a) et la bague de palier extérieure (56).

12. Dispositif d'entraînement selon l'une des revendications précédentes, **caractérisé en ce que** la bague de palier intérieure ou la bague de palier extérieure du palier à quatre points (55a, 137) est conçue de manière divisée.

13. Dispositif d'entraînement selon l'une des revendications précédentes, **caractérisé en ce que** la transmission à vis à billes, la bague de palier (46) et le palier et éventuellement la cible de capteur ou la roue de capteur d'un capteur de rotation forment une unité de montage.

14. Dispositif d'entraînement selon l'une des revendications précédentes, **caractérisé en ce que** l'on prévoit un dispositif d'appui (47a, 47b, 47c, 47d), notamment une bague d'appui, pour la partie tournante du moteur ou transmission, le dispositif d'appui ou la bague d'appui étant agencé notamment sur l'écrou de l'entraînement à vis à billes, le stator ou le composant (5, 46) relié au boîtier.

15. Dispositif d'entraînement, comportant un moteur à induit intérieur, pourvu d'un boîtier moteur, d'un stator à enroulement et d'un rotor présentant au moins un aimant permanent, le boîtier moteur présentant une partie de boîtier s'étendant sensiblement radialement sur un côté du stator, et le rotor présentant au moins deux paliers de rotor, **caractérisé en ce que** les paliers de rotor (6, 9, 17) sont agencés sur la partie de boîtier (1b) s'étendant sensiblement radialement ou sur une partie (5) y étant reliée s'étendant sensiblement axialement, la transmission étant une transmission à vis à billes, laquelle présente un écrou (18, 48, 118a) relié au rotor.
